# EUROPÄISCHE PATENTANMELDUNG

(11) **EP 1 975 477 A1**
(43) Veröffentlichungstag der Anmeldung: **01.10.2008**
(21) Anmeldenummer: 08005271.5
(22) Anmeldetag: 20.03.2008
(51) Int. Cl.: F16J 15/00, F16J 15/54, F16F 15/16, F16L 27/093

(54) **Drehdurchführung, insbesondere für einen Torsionsschwingungsdämpfer in einem Antriebsstrang eines Fahrzeugs**

(30) Priorität: 31.03.2007 DE 102007015640
(71) Anmelder: ZF Friedrichshafen AG, 88038 Friedrichshafen (DE)
(72) Erfinder: Busold, Thomas, 36039 Fulda (DE); Dögel, Thomas, 97688 Bad Kissingen (DE)

(57) **Zusammenfassung**

Eine Drehdurchführung zum Durchführen von Fluid im Angrenzungsbereich zwischen zwei bezüglich einander um eine Drehachse (A) drehbaren Drehdurchführungselementen (12, 14), wobei ein erstes (12) der Drehdurchführungselemente (12, 14) eine erste Drehdurchführungselementenoberfläche (16) aufweist und ein zweites (14) der Drehdurchführungselemente (12, 14) eine der ersten Drehdurchführungselementenoberfläche (16) gegenüber liegende und bezüglich dieser um die Drehachse (A) drehbare zweite Drehdurchführungselementenoberfläche (18) aufweist, wobei eine Fluidkanalanordnung (20) mit einem ersten Kanalbereich (22) im ersten Drehdurchführungselement (12) und mit einem zweiten Kanalbereich (24) im zweiten Drehdurchführungselement (14) vorgesehen ist und der erste Kanalbereich (22) und der zweite Kanalbereich (24) in einem Kanalangrenzungsbereich (26) in Fluidaustauschverbindung miteinander stehen, ferner umfassend eine zwischen dem ersten Drehdurchführungselement und dem zweiten Drehdurchführungselement wirkende Dichtungsanordnung (30), ist dadurch gekennzeichnet, dass die Dichtungsanordnung (30) wenigstens eine Dichtungsstufe (48a, 50a, 48b, 50b) mit einer Gegendruckkammer (44a, 46a, 44b, 46b) umfasst, welche zwischen einem dem Kanalangrenzungsbereich (26) näher liegenden Dichtungselement (32a, 36a, 32b, 36b) und einem vom Kanalangrenzungsbereich (26) weiter entfernt liegenden Dichtungselement (36a, 40a, 36b, 40b) begrenzt ist.

## Beschreibung

Die vorliegende Erfindung betrifft eine Drehdurchführung, wie sie insbesondere eingesetzt werden kann, um ein Druckfluid zu einem Torsionsschwingungsdämpfer in einem Antriebsstrang eines Fahrzeugs zu leiten bzw. von diesem abzuziehen.

Um in Antriebssträngen von Fahrzeugen auftretende Drehschwingungen zu dämpfen, werden so genannte Torsionsschwingungsdämpfer, beispielsweise Zweimassenschwungräder, eingesetzt, bei welchen eine Primärseite und eine Sekundärseite gegen die Wirkung einer Dämpferfederanordnung bezüglich einander verdrehbar sind. Einen wesentlichen Einfluss auf die Schwingungsdämpfungscharakteristik hat dabei die Federsteifigkeit der Dämpferelementenanordnung. Im Allgemeinen werden hierzu Schraubendruckfedern eingesetzt, deren Federsteifigkeit durch die konstruktive Auslegung vorgegeben ist bzw. auch durch die Einbaulage im Torsionsschwingungsdämpfer beeinflusst werden kann.

Bei so genannten Gasfeder-Torsionsschwingungsdämpfern umfasst die Dämpferfederanordnung ein Volumen eines komprimierbaren Mediums, im Allgemeinen ein Gasvolumen, das bei auftretenden Drehungleichförmigkeiten bzw. zu übertragenden Drehmomenten komprimiert werden kann. Mit derartigen Systemen können deutlich höhere Energiedichten erlangt werden, als bei herkömmlichen Schraubendruckfedern, so dass auch größere Drehungleichförmigkeiten ausgeglichen werden können. Durch die Variation der Vorspannung des kompressiblen Mediums, also des Gases, wird es weiterhin möglich, die Federsteifigkeit und somit die Dämpfungscharakteristik zu beeinflussen. Hierzu wird im Allgemeinen ein flüssiges Medium eingeleitet, welches durch einen Trennkolben oder dergleichen von dem gasförmigen, kompressiblen Medium getrennt ist. Durch Verändern des Drucks dieses flüssigen Mediums ändert sich auch der Kompressionszustand des Gases und mithin die Dämpfungscharakteristik.

Da derartige mit kompressiblen Medien arbeitende Torsionsschwingungsdämpfer im Allgemeinen rotierende Systeme sind, ist es erforderlich, das insbesondere zum Beeinflussen der Dämpfungscharakteristik eingesetzte flüssige Medium über eine Drehdurchführung in den Bereich des Torsionsschwingungsdämpfers zu leiten bzw. von diesem abzuziehen. Eine derartige Drehdurchführung kann beispielsweise durch zwei koaxial zueinander angeordnete Bauteile realisiert sein, von welchen ein äußeres erstes Drehdurchführungselement feststeht, während ein inneres, wellenartig ausgestaltetes zweites Drehdurchführungselement zusammen mit dem Torsionsschwingungsdämpfer rotiert. In den beiden Drehdurchführungselementen ist eine Fluidkanalanordnung mit jeweiligen Kanalbereichen im ersten bzw. zweiten Drehdurchführungselement gebildet. In einem Kanalangrenzungsbereich sind diese Kanalbereiche zu jeweiligen Oberflächen der Drehdurchführungselemente offen und stehen somit über einen zwischen den beiden Drehdurchführungselementen gebildeten Kanalangrenzungsraum in Fluidaustauschverbindung miteinander. Zu beiden axialen Seiten ist dieser Kanalangrenzungsraum dann durch Dichtungselemente einer Dichtungsanordnung abgeschlossen, um den Austritt von Fluid aus diesem Kanalangrenzungsbereich so weit als möglich zu verhindern.

Da derartige Dichtungselemente im Allgemeinen bei den zu erwartenden sehr hohen Drücken von bis zu 70 bar keinen vollständig dichten Abschluss des Kanalangrenzungsraums gewährleisten, ist es beispielsweise bekannt, an der von dem Kanalangrenzungsraum abgewandten Seite dieser Dichtungselemente einen Fluidableitungsraum zu bilden, der durch ein weiteres Dichtungselement abgeschlossen ist und der über eine Ableitungskanalanordnung zu einem im Wesentlichen drucklosen Reservoir für das Fluid offen ist. Dies bedeutet, dass Fluid, das über die den Kanalangrenzungsraum abschließenden Dichtungselemente hinweg gelangt ist, in den Fluidableitungsraum gelangt und auf Grund der Tatsache, dass dieser Fluidableitungsraum im Wesentlichen drucklos ist, das dann folgende Dichtungselement nicht mehr druckbelastet ist. Somit kann sichergestellt werden, dass das gesamte in den Fluidableitungraum gelangende Fluid auch über die Ableitungskanalanordnung zum Reservoir zurückgeführt werden kann.

Ein Problem bei derartigen Drehdurchführungen ist, dass die den Fluidableitungsraum begrenzenden Dichtungselemente über den gesamten Bereich der entstehenden Druckbelastungen an ihrer dem Kanalangrenzungsbereich zugewandten Seite vollständig diesen Druck aufnehmen müssen. Im normalen Arbeitsbereich wird dieser Druck bei Drehdurchführungen für Torsionsschwingungsdämpfer in Antriebssträngen einen Wert von 20bar im Allgemeinen nicht übersteigen. Treten jedoch vergleichsweise große Drehschwingungen auf, so hat dies selbstverständlich zur Folge, dass auch das flüssige Medium entsprechend druckbelastet wird und dieser Druck auch die den Kanalangrenzungraum begrenzenden Dichtungselemente belastet. Dies kann zu übermäßigen Fluidkleckagen und insbesondere auch einer Beschädigung der Dichtungselemente führen.

Es ist die Aufgabe der vorliegenden Erfindung, eine Drehdurchführung, insbesondere für einen Torsionsschwingungsdämpfer in einem Antriebsstrang eines Fahrzeugs, vorzusehen, mit welcher in zuverlässiger Art und Weise auch ein dichter Abschluss gegen sehr hohe Drücke erlangt wird.

Erfindungsgemäß wird diese Aufgabe gelöst durch eine Drehdurchführung zum Durchführen von Fluid im Angrenzungsbereich zwischen zwei bezüglich einander um eine Drehachse drehbaren Drehdurchführungselementen, wobei ein erstes der Drehdurchführungselemente eine erste Drehdurchführungselementenoberfläche aufweist und ein zweites der Drehdurchführungselemente eine der ersten Drehdurchführungselementenoberfläche gegenüber liegende und bezüglich dieser um die Drehachse drehbare zweite Drehdurchführungselementenoberfläche aufweist, wobei eine Fluidkanalanordnung mit einem ersten Kanalbereich im ersten Drehdurchführungselement und mit einem zweiten Kanalbereich im zweiten Drehdurchführungselement vorgesehen ist und der erste Kanalbereich und der zweite Kanalbereich in einem Kanalangrenzungsbereich in Fluidaustauschverbindung miteinander stehen, ferner umfassend eine zwischen dem ersten Drehdurchführungselement und dem zweiten Drehdurchführungselement wirkende Dichtungsanordnung.

Dabei ist dann weiter vorgesehen, dass die Dichtungsanordnung wenigstens eine Dichtungsstufe mit einer Gegendruckkammer umfasst, welche zwischen einem dem Kanalangrenzungsbereich näher liegenden Dichtungselement und einem vom Kanalangrenzungsbereich weiter entfernt liegenden Dichtungselement begrenzt ist.

Bei der erfindungsgemäßen Drehdurchführung bildet die Dichtungsanordnung also zumindest eine Dichtungsstufe mit einer durch zwei Dichtungselemente begrenzten Gegendruckkammer. In dieser Gegendruckkammer wird beispielsweise auf Grund der im Allgemeinen vorhandenen Leckage im Bereich der Dichtungselemente sich das im Angrenzungsbereich zwischen den beiden Drehdurchführungselementen auch vorhandene Fluid ansammeln und dort an der Rückseite des dem Kanalangrenzungsbereich näher liegenden Dichtungselements einen Gegendruck aufbauen. Auf Grund dieses Gegendrucks wird dieses Dichtungselement dann nicht nur von der Seite des Kanalangrenzungsbereichs her belastet, sondern auch von seiner Rückseite her, so dass es auch bei vergleichsweise hohen Drücken auf Grund der vorhandenen Druckdifferenz deutlich weniger belastet wird, als in einem Fall, in welchem ein derartiger Gegendruck nicht vorhanden ist. Der Gegendruck kann bei der erfindungsgemäßen Drehdurchführung daher aufgebaut werden, da eine jeweilige Gegendruckkammer durch Dichtungselemente begrenzt ist und nicht über eine Ableitungskanalanordnung oder dergleichen zum Ableiten von dort sich ansammelndem Fluid genutzt wird, also nicht drucklos gehalten ist.

Bei einer besonders vorteilhaften Weiterbildung der erfindungsgemäßen Drehdurchführung wird vorgeschlagen, dass in Richtung von dem Kanalangrenzungsbereich weg eine Mehrzahl aufeinander folgender Dichtungsstufen jeweils mit einer Gegendruckkammer vorgesehen ist, wobei die Gegendruckkammern zweier aufeinander folgender Dichtungsstufen durch ein Dichtungselement getrennt sind, das bei der dem Kammerangrenzungsbereich näher liegenden Dichtungsstufe das vom Kanalangrenzungsbereich weiter entfernt liegende Dichtungselement bildet und bei der vom Kanalangrenzungsbereich weiter entfernt liegenden Dichtungsstufe das dem Kanalangrenzungsbereich näher liegende Dichtungselement bildet. In dieser Anordnung wird also eine Kaskade von Dichtungsstufen erzeugt, so dass in Richtung vom Kanalangrenzungsbereich weg eine stufenartige Abnahme des jeweilige Dichtungselemente belastenden Drucks bzw. auch des diese Dichtungselemente stützenden Gegendrucks erzeugt wird.

Bei einer in Verbindung der Drehdurchführung mit einem Torsionsschwingungsdämpfer in einem Antriebsstrang eines Fahrzeugs besonders vorteilhaften Variante wird vorgeschlagen, dass die erste Drehdurchführungselementenoberfläche eine zur Drehachse im Wesentlichen koaxiale Innenumfangsfläche des ersten Drehdurchführungselements ist und dass die zweite Drehdurchführungselementenoberfläche eine zur Drehachse und zur ersten Drehdurchführungselementenoberfläche im Wesentlichen koaxiale Außenumfangsfläche des zweiten Drehdurchführungelements ist.

Alternativ ist es selbstverständlich möglich, dass die erste Drehdurchführungelementenoberfläche und die zweite Drehdurchführungselementenoberfläche zur Drehachse im Wesentlichen orthogonal stehen und einander axial gegenüber liegen.

Die Dichtungselemente können ringartig ausgebildet sein und in Ringnuten am ersten Drehdurchführungselement oder/und am zweiten Drehdurchführungselement eingreifend positioniert sein und an der Drehdurchführungselementenoberfläche des jeweils anderen Drehdurchführungselements, also desjenigen Drehdurchführungselement, in dem keine einem Dichtungselement zugeordnete Nut vorgesehen ist, anliegen.

Wie bereits vorangehend dargelegt, sind derartige Dichtungselemente allgemein so ausgebildet, dass sie eine gewisse Leckage, also einen Leckagestrom des sie belastenden Fluids aufweisen bzw. zulassen. Diese einen Gegendruckraum also begrenzenden Dichtungselemente weisen somit also im Wesentlichen auch die Funktionalität eines Druckbegrenzungsventils bzw. einer Drosselstelle auf. Um insbesondere bei starken Druckbelastungen eine Überlastung dieser Dichtungselemente verbessert zu verhindern bzw. definierte Druckverhältnisse einstellen zu können, wird vorgeschlagen, dass wenigstens zwei unmittelbar aufeinander folgende Räume über ein zu dem diese trennenden Dichtungselement parallel wirkendes Druckbegrenzungsventil in Verbindung miteinander bringbar sind. Ein derartiges Druckbegrenungsventil hat also die Funktionalität, definierte Druckverhältnisse in den beiden durch dieses miteinander zu verbindenden Räumen einzustellen, beispielsweise in der Art, dass eine bestimmte maximale Druckdifferenz nicht überschritten werden kann.

Vor allem bei koaxial sich gegenüber liegenden Drehdurchführungselementenoberflächen ist es erforderlich, den Kanalangrenzungsbereich in beiden axialen Dichtungen abzuschließen. Auch bei axial sich gegenüber liegenden Drehdurchführungselementenoberflächen kann es erforderlich sein, in beiden radialen Richtungen einen derartigen Abschluss zu erlangen. Es wird daher vorgeschlagen, dass an beiden Seiten in Richtung von dem Kanalangrenzungsbereich weg jeweils wenigstens eine Dichtungsstufe mit einem Gegendruckraum vorgesehen ist und dass die Gegendruckräume gleicher Dichtungsstufen an den beiden Seiten bezüglich des Kanalangrenzungsbereichs durch eine Verbindungskanalanordnung zum Bereitstellen eines Paares in Verbindung miteinander stehender Gegendruckräume verbunden sind. Durch das Verbinden der Gegendruckräume gleicher Dichtungsstufen an den beiden Seiten bezüglich des Kanalangrenzungsbereichs wird dafür gesorgt, dass diese paarweise einander zugeordneten und miteinander verbundenen Gegendruckräume im Wesentlichen immer den gleichen Druck aufweisen. Somit wird der Aufbau von Druckdifferenzen an den beiden Seiten des Kanalangrenzungsbereichs vermieden.

Um auch bei dieser Anordnung eine definierte Abstufung des Drucks in in Richtung von dem Kanalangrenzungsbereich weg aufeinander folgenden Dichtungsstufen erlangen zu können, wird vorgeschlagen, dass die Paare von Gegendruckräumen unmittelbar aufeinander folgender Dichtungsstufen durch ein Druckbegrenzungsventil in Verbindung miteinander bringbar sind.

Die Verbindungskanalanordnung verschiedener Paare von Gegendruckräumen können in verschiedenen Umfangsbereichen bezüglich der Drehachse angeordnet sein. Auf diese Art und Weise wird erreicht, dass das über die Verbindungskanalanordnungen strömende Fluid die so verbundenen Gegendruckräume zumindest teilweise durchströmem muss und somit einen Kühleffekt erzielen kann. Ferner erleichtert die räumliche Trennung dieser Verbindungskanalanordnung den Aufbau der Drehdurchführungselemente.

Bei einem weiteren vorteilhaften Aspekt wird vorgeschlagen, dass der Gegendruckraum einer auf den Kanalangrenzungsbereich unmittelbar folgenden ersten Dichtungsstufe über ein Druckbegrenzungsventil in Verbindung mit einem Kanalangrenzungsraum des Kanalangrenzungsbereichs bringbar ist. Auf diese Art und Weise wird dafür gesorgt, dass auch bereits auf den Kanalangrenzungsbereich folgende erste Dichtungselemente durch das diesem zugeordnete bzw. parallel dazu wirkende Druckbegrenzungsventil in definierter Art und Weise entlastet werden kann.

Auch dem in Richtung von dem Kanalangrenzungsbereich weg letzten Gegendruckraum einer Dichtungsstufe kann ein Druckbegrenzungsventil zugeordnet sein, um diesen Gegendruckraum in Verbindung mit einem auf diesen folgenden Fluidableitungsraum bringen zu können. Diesem Fluidableitungsraum kann dann eine Ableitungskanalanordnung zugeordnet sein zum Ableiten von Fluid aus diesem. Es sei hier darauf hingewiesen, dass selbstverständlich dann, wenn nur eine einzige Dichtungsstufe vorgesehen ist, auch auf diese einzige Dichtungsstufe bzw. deren Gegendruckraum ein derartiger Ableitungsraum folgen kann.

Die Ableitungskanalanordnung kann dann zu einem im Wesentlichen drucklosen Fluidreservoir führen. Auf diese Art und Weise ist dafür gesorgt, dass der Fluidableitungsraum drucklos gehalten ist. Somit wird das diesen Fluidableitungsraum an der vom Kanalangrenzungsbereich abgewandt liegenden Seite abschließende Dichtungselement im Wesentlichen ohne Druckbelastung arbeiten und somit eine Fluidleckage vollständig unterbinden.

Um dabei dafür zu sorgen, dass eine durch Überlastung erzeugte Beschädigung von Dichtungselementen nicht auftreten kann, wird vorgeschlagen, dass das Druckbegrenzungsventil eine derartige Druckbegrenzungscharakteristik aufweist, dass eine in den durch dieses zu verbindenden Räumen maximal erzeugbare Druckdifferenz kleiner ist, als eine maximal zulässige Druckbelastung des diese Räume trennenden Dichtungselements.

Um insbesondere bei einer kaskadenartigen Anordnung von Dichtungsstufen eine gleichmäßige Abstufung des Fluiddrucks erreichen zu können, wird vorgeschlagen, dass unmittelbar aufeinander folgende Räume verbindende/trennende Druckregelventile derart ausgebildet sind, dass die zwischen unmittelbar aufeinander folgenden Druckräumen maximal erzeugbaren Druckdifferenzen im Wesentlichen gleich sind. Dabei können die Druckbegrenzungsventile mit im Wesentlichen gleichem Schaltdruck ausgebildet sein, also dann, wenn eine über diese vorhandene definierte Druckdifferenz aufgebaut ist, öffnen, oder können als Proportionalventile aufgebaut sein, so dass unabhängig davon, wie hoch der an einer Eingangsseite eines derartigen Druckbegrenzungsventils anliegende Druck ist, immer ein in definiertem Proportionalitätsverhältnis zu diesem Eingangsdruck stehender Ausgangsdruck an der Ausgangsseite erzeugt wird.

Um auch beim Einsatz von Proportionalventilen eine im Wesentlichen gleichmäßige Abstufung der Drücke in aufeinander folgenden Gegendruckräumen erlangen zu können, wird vorgeschlagen, dass ein durch den Quotienten aus Ausgangsdruck und Eingangsdruck eines jeweiligen Druckbegrenzungsventils gebildeter Proportionalitätsfaktor bei den Druckbegrenzungsventilen in Richtung von dem Kanalangrenzungsbereich weg zunimmt.

Ferner betrifft die vorliegende Erfindung eine Kombination einer Torsionsschwingungsdämpferanordnung mit einer Primärseite und einer Sekundärseite und einer die Primärseite mit der Sekundärseite koppelnden und ein kompressibles Medium umfassenden Dämpferanordnung mit einer erfindungsgemäßen Drehdurchführung.

Die vorliegende Erfindung wird nachfolgend mit Bezug auf die beiliegenden Figuren detailliert beschrieben. Es zeigt:
- Fig. 1: eine Längsschnittansicht einer erfindungsgemäß aufgebauten Drehdurchführung in prinzipartiger Darstellung;
- Fig. 2: eine der Fig. 1 entsprechende Darstellung einer alternativen Ausgestaltungsart;
- Fig. 3: eine der Fig. 1 entsprechende Darstellung einer alternativen Ausgestaltungsart;
- Fig. 4: eine der Fig. 1 entsprechende Darstellung einer alternativen Ausgestaltungsart;
- Fig. 5: eine weitere Darstellung einer Drehdurchführung mit radial gestaffelten Dichtungselementen.

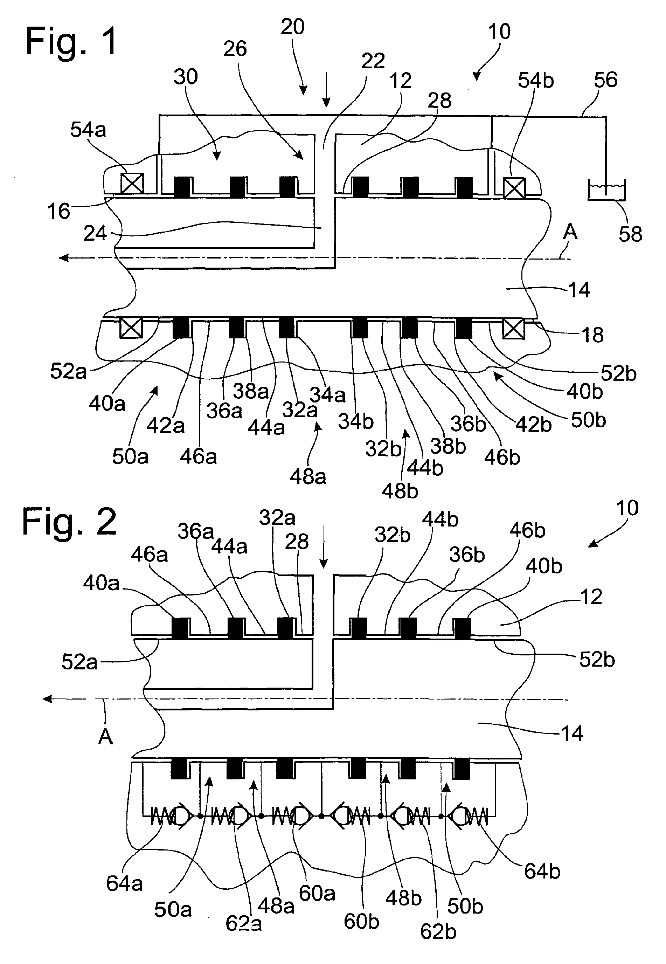

Die Fig. 1 zeigt in prinzipartiger Längsschnittdarstellung eine Drehdurchführung 10, über welche ein Fluid, beispielsweise eine unter Druck stehende Flüssigkeit, von einem feststehenden ersten Drehdurchführungselement 12 auf ein um eine Drehachse A rotierendes zweites Drehdurchführungselement 14 übertragen werden kann. Man erkennt, dass das erste Drehdurchführungselement 12 eine bezüglich der Drehachse A im Wesentlichen koaxial liegende und diese zylindrisch umgebende erste Drehdurchführungselementenoberfläche 16 aufweist, die also eine Innenumfangsfläche bildet. Dieser liegt eine eine zweite Drehdurchführungselementenoberfläche 18 bereitstellende Außenumfangsfläche des zweiten Drehdurchführungselements 14 im Wesentlichen koaxial gegenüber. Auch diese zweite Drehdurchführungselementenoberfläche ist im Wesentlichen mit zylindrischer Kontur gebildet.

Über eine Fluidkanalanordnung 20 kann Fluid vom ersten Drehdurchführungselement 12 in das zweite Drehdurchführungselement 14 übertragen werden bzw. kann selbstverständlich auch vom zweiten Drehdurchführungselement 14 zurück in das erste Drehdurchführungselement 12 geleitet werden. Die Fluidkanalanordnung 20 umfasst einen ersten Kanalbereich 22 im ersten Drehdurchführungselement 12, der hier beispielsweise einen oder mehrere Kanäle umfassen kann, der bzw. die zur ersten Drehdurchführungselementenoberfläche 16 offen ist. Ein zweiter Kanalbereich 24 im zweiten Drehdurchführungselement 14 weist einen zur zweiten Drehdurchführungselementenoberfläche 18 offenen Abschnitt auf, wobei die beiden Kanalbereiche 22, 24 näherungsweise im gleichen axialen Bereich der beiden Drehdurchführungselemente 12, 14 offen sind, wie dies die Fig. 1 auch veranschaulicht. Es ist somit ein Kanalangrenzungsbereich 26 gebildet, in welchem über einen zwischen den beiden Drehdurchführungselementen 12, 14 gebildeten und die Drehachse A ringartig umgebenden Kanalangrenzungsraum 28 die beiden Kanalbereiche 22, 24 in Fluidaustauschverbindung miteinander stehen.

Um den Fluidaustritt aus diesem Kanalangrenzungsbereich 26 bzw. aus dem Zwischenraum zwischen den beiden Drehdurchführungselementen 12, 14 zu verhindern, ist eine allgemein mit 30 bezeichnete Dichtungsanordnung vorgesehen, die, wie im Folgenden dargelegt, eine Mehrzahl von Dichtungselementen aufweist.

Man erkennt in Fig. 1, dass der Kanalangrenzungsraum 28 an beiden Seiten der Kanalbereiche 22, 24, also hier an beiden axialen Seiten des Kanalangrenzungsbereichs 26, durch zwei ringartig ausgestaltete Dichtungselemente 32a, 32b begrenzt ist. Diese Dichtungselemente 32a, 32b greifen in jeweilige Nuten 34a, 34b am Innenumfang des ersten Drehdurchführungselements 12 ein und liegen an der zweiten Drehdurchführungselementenoberfläche 18 des zweiten Dichtungselements 14 an. Etwas weiter entfernt von dem Kanalangrenzungsbereich 26 und in axialem Abstand zu den Dichtungselementen 32a, 32b sind weitere ringartige Dichtungselemente 36a, 36b ebenfalls in jeweiligen Umfangsnuten 38a, 38b am ersten Drehdurchführungselement 12 aufgenommen und liegen gleichermaßen an der zweiten Drehdurchführungselementenoberfläche 18 des zweiten Drehdurchführungelements 14 an. Noch weiter entfernt von dem Kanalangrenzungsbereich 26 sind weitere ringartige Dichtungselemente 40a, 40b wiederum in Umfangsnuten 42a, 42b am Innenumfang des ersten Drehdurchführungselements 12 aufgenommen und liegen an der zweiten Drehdurchführungselementenoberfläche 18 des zweiten Drehdurchführungselements 14 abdichtend an.

Zwischen den auch unmittelbar den Kanalangrenzungraum 28 in Richtung vom Kanalangrenzungsbereich 26 weg begrenzenden Dichtungselementen 32a und 32b und den in Richtung von dem Kanalangrenzungsbereich 26 weiter weg dann folgenden Dichtungselementen 36a, 36b ist jeweils ein Gegendruckraum 44a, 44b gebildet. Die Druckbegrenzungsräume 44a, 44b sind also begrenzt durch die jeweiligen Dichtungselemente 32a, 36a bzw. 32b, 36b sowie die dazwischen eingeschlossenen Abschnitte der ersten Drehdurchführungselementenoberfläche 16 und der zweiten Drehdurchführungselementenoberfläche 18.

Zwischen den Dichtungselementen 36a, 36b und den in Richtung von dem Kanalangrenzungsbereich 26 weiter weg dann folgenden Dichtungselementen 40a, 40b sind jeweilige Gegendruckräume 46a, 46b gebildet, wobei auch diese durch die jeweiligen Dichtungselemente 36a, 40a bzw. 36b, 40b und die dazwischen liegenden Bereiche der Drehdurchführungselementenoberflächen 16 und 18 begrenzt sind.

Durch die vorangehend beschriebene und in der Fig. 1 erkennbare Abfolge von Dichtungselementen und dazwischen jeweils gebildeten Gegendruckräumen ist eine kaskadenartige Anordnung von Dichtungsstufen gebildet. So bilden die Dichtungselemente 32a, 36a bzw. 32b, 36b mit den jeweils dazwischen begrenzten Gegendruckräumen 44a, 44b jeweils eine erste Dichtungsstufe 48a bzw. 48b. Die Dichtungselemente 36a, 40a bzw. 36b, 40b bilden mit den dazwischen jeweils begrenzten Gegendruckräumen 46a, 46b eine zweite Dichtungsstufe 50a, 50b. Dabei bildet jeweils das Dichtungselement 36a bzw. 36b sowohl ein Dichtungelement der ersten Dichtungsstufe 48a, 48b, als auch ein Dichtungselement der zweiten Dichtungsstufe 50a, 50b.

Folgend auf die zweite und hier auch in Richtung von dem Kanalangrenzungsbereich 26 weg letzte Dichtungsstufe 50a bzw. 50b ist zwischen den Drehdurchführungselementenoberflächen 16 bzw. 18 jeweils ein Fluidableitungsraum 52a, 52b gebildet. Die Fluidableitungsräume 52a, 52b sind an ihrem vom Kanalangrenzungsbereich 26 entfernt liegenden Endbereich jeweils durch Dichtungselemente 54a, 54b begrenzt. Jeder der Fluidableitungsräume 52a, 52b ist über eine im Wesentlichen im ersten Drehdurchführungselement 12 gebildete Fluidableitungskanalanordnung 56 in Verbindung mit einem Reservoir 58 für das über die Drehdurchführung 10 zu übertragende Fluid. Dieses Fluidreservoir 58 ist im Wesentlichen drucklos, so dass auch die Ableitungskanalanordnung 56 und die Fluidableitungsräume 52a, 52b drucklos sind.

Bei durch die Drehdurchführung 10 hindurch zu übertragendem und unter vergleichsweise hohem Druck von beispielsweise bis zu 70 bar stehendem Fluid, das im Allgemeinen eine Flüssigkeit sein wird, liegt dieser hohe Druck zunächst im Wesentlichen im Kanalangrenzungsraum 28 vor und belastet somit die ersten auf diesen Kanalangrenzungsraum 28 folgenden Dichtungselemente 32a, 32b der ersten Dichtungsstufen 48a, 48b. Wie vorangehend dargelegt, sind die den verschiedenen Dichtungsstufen 48a, 48b bzw. 50a, 50b zugeordneten Dichtungselemente 32a, 32b, 36a, 36b, 40a, 40b so ausgestaltet, dass sie bei Druckbelastung zwar grundsätzlich einen dichten Abschluss erzeugen, jedoch eine gewisse Fluidleckage zulassen bzw. zwangsweise aufweisen. Dies bedeutet, dass bei Druckaufbau im Kanalangrenzungsraum 28 auf Grund der zwischen dem Kanalangrenzungsraum 28 und den Gegendruckräumen 44a, 44b der ersten Dichtungsstufen 48a, 48b vorhandenen Druckdifferenz Fluid auch in diese Gegendruckräume 44a, 44b gelangen wird. Es wird sich somit in diesen Gegendruckräumen 44a, 44b bis zum Erreichen einer Grenzdruckdifferenz ein Gegendruck aufbauen. Dieser Gegendruck stützt die Dichtungselemente 32a, 32b an ihrer von dem Kanalangrenzungsbereich 26a abgewandt liegenden Seite, so dass sie nur noch einer verminderten durch den Druck im Kanalangrenzungsraum 28 auf diese einwirkenden einseitigen Belastung ausgesetzt sind.

Ist der Druck in den Gegendruckräumen 44a, 44b der ersten Dichtungsstufen 48a, 48b ausreichend hoch, wird sich ein entsprechender Vorgang auch im Übergang zwischen den beiden Dichtungsstufen 48a, 48b und 50a, 50b einstellen. D.h., es wird Fluid auch als Leckagestrom über die Dichtungselemente 36a, 36b hinweg in die Gegendruckräume 46a, 46b der zweiten Dichtungsstufen 50a, 50b strömen, und zwar auch wieder bis zum Aufbau eines bestimmten Differenzdrucks zwischen den Gegendruckräumen 44a, 46a und 44b, 46b. Dies hat zur Folge, dass auch die beiden Dichtungsstufen 48a, 50a bzw. 48b, 50b trennenden Dichtungselemente 36a, 36b nur einseitig mit einer aus der Druckdifferenz zwischen den beiden Gegendruckräumen 44a, 46a bzw. 44b, 46b sich bestimmenden Kraft belastet werden.

Da auch die Dichtungselemente 40a, 40b der in Richtung vom Kanalangrenzungsbereich 26 weg jeweils letzten Dichtungsstufen 50a, 50b beispielsweise bei Erreichen eines bestimmten Fluiddrucks in den Gegendruckräumen 46a, 46b einen Leckagestrom zulassen werden, wird Fluid in die Fluidableitungsräume 52a, 52b gelangen. Da im Gegensatz zu den Gegendruckräumen 44a, 46a, 44b, 46b diese Fluidableitungsräume 52a, 52b nicht abgeschlossen sind, sondern über die Ableitungskanalanordnung 56 offen und somit drucklos gehalten sind, kann, ohne größere Belastung der von dem Kanalangrenzungsbereich 26 am weitesten entfernt liegenden Dichtungselemente 54a, 54b das in die Fluidableitungsräume 52a, 52b gelangte Fluid zum Reservoir 58 zurückströmen und erneut in den Kreislauf gespeist werden. Mit dem vorangehend beschriebenen Aufbau einer Drehdurchführung wird es möglich, durch die über die einzelnen Dichtungsstufen hinweg erfolgende Herabsetzung des die Dichtungselemente einer jeweils folgenden Dichtungsstufe belastenden Drucks und die Gegenabstützung der Dichtungselemente auch sehr hohe Drücke aufzunehmen, wie sie insbesondere auftreten, wenn mit Gasfedern ausgestattete Torsionsschwingungsdämpfer in Antriebssträngen von Fahrzeugen eingesetzt werden.

Eine abgewandelte Ausgestaltungsform der Drehdurchführung 10 wird nachfolgend mit Bezug auf die Fig. 2 beschrieben. Diese entspricht in weiten Teilen der vorangehend beschriebenen Ausgestaltungsform, insbesondere hinsichtlich der Anordnung der Dichtungselemente bzw. Dichtungsstufen, so dass auf die voranstehenden Ausführungen verwiesen werden kann. Auch sei darauf hingewiesen, dass die Fluidableitungsräume und die damit in Verbindung stehenden Baugruppen in Fig. 2 und auch den folgenden Figuren nicht weiter gezeigt sind, selbstverständlich jedoch auch dort vorhanden sind bzw. vorhanden sein können.

Man erkennt in Fig. 2, dass in Zuordnung zu jedem der Dichtungselemente 32a, 36a, 40a bzw. 32b, 36b, 40b, welche die an beiden Seiten des Kanalangrenzungsraums 28 liegenden Dichtungsstufen 48a, 50a bzw. 48b, 50b bilden bzw. begrenzen, ein Druckbegrenzungsventil 60a, 62a, 64a bzw. 60b, 62b, 64b vorgesehen ist. Dabei sind die Druckbegrenzungsventile 60a, 60b, welche eine Verbindung zwischen dem Kanalangrenzungsraum 28 und den Gegendruckräumen 44a, 44b der ersten Dichtungsstufen 48a, 48b freigeben bzw. unterbrechen können, jeweils in einem Verbindungskanal angeordnet, welcher eine Verbindung zwischen dem Kanalangrenzungsraum 28 und dem Gegendruckraum 44a bzw. dem Gegendruckraum 44b herstellt. Die Druckbegrenzungsventile 62a, 62b sind in Verbindungskanälen vorgesehen, welche eine Verbindung zwischen den Gegendruckräumen 44a bzw. 44b und den Gegendruckräumen 46a bzw. 46b herstellen. Die Druckbegrenzungsventile 64a, 64b sind in Verbindungskanälen vorgesehen, die jeweils eine Verbindung zwischen dem Gegendruckraum 46a bzw. dem Gegendruckraum 46b und dem darauf jeweils noch folgenden Fluidableitungsraum 52a bzw. 52b herstellen. Die Druckbegrenzungsventile 60a, 62a, 64a, 60b, 62b, 64b können beispielsweise als federvorbelastete Rückschlagventile ausgebildet sein, die weiterhin so ausgebildet sein können, dass sie gleiche Druckschaltcharakteristiken aufweisen, also bei dem gleichen jeweils an der Seite höheren Drucks, also der Eingangsseite, anliegenden Druck bzw. der entsprechenden Druckdifferenz zwischen der Eingangsseite und der Seite niedrigeren Drucks, also der Ausgangsseite, öffnen. Dies bedeutet, dass zu jedem der die Dichtungsstufen 48a, 50a bzw. 48b, 50b definierenden Dichtungselemente 32a, 36a, 40a, 32b, 36b, 40b ein Druckbegrenzungsventil 60a, 62a, 64a, 60b, 62b, 64b parallel geschaltet ist. Bei entsprechenden Druckverhältnissen wird also nicht nur ein Leckagestrom über die jeweiligen Dichtungselemente hinweg auftreten, sondern es werden die entsprechend druckbelasteten Druckbegrenzungsventile öffnen, mit der Folge, dass zwischen den über ein derartiges offenes Druckbegrenzungsventil dann verbundenen Räumen eine entsprechend der Schaltcharakteristik, d.h. dem Schaltdruck eines derartigen Ventils definierte Druckdifferenz entstehen wird. Sind beispielsweise die Druckbegrenzungsventile 60a, 62a, 64a, 60b, 62b, 64b so aufgebaut, dass sie bei einem Schaltdruck von 20 bar öffnen und ist weiterhin im Kanalangrenzungsraum 28 der vorherrschende Druck bei etwa 60bar, so werden alle Druckbegrenzungsventile öffnen, mit der Folge, dass in den Gegendruckräumen 44a, 44b ein Druck von etwa 40 bar vorherrschen wird und in den Gegendruckräumen 46a, 46b ein Druck von etwa 20 bar vorherrschen wird. Die Folge davon ist, dass jedes der Dichtungselemente 32a, 36a, 40a, 32b, 36b, 40b an der Seite höheren Drucks, also der mit dem Kanalangrenzungsraum 28 zugewandten Seite mit einem Druck von etwa 20 bar belastet wird und auf diese Art und Weise eine übermäßige Druckbelastung vor allem der unmittelbar auch den Kanalangrenzungsraum 28 begrenzenden Dichtungselemente 32a, 32b vermieden werden kann. Liegt der Druck im Kanalangrenzungsraum 28 nur etwas über 20bar, so werden nur die Druckbegrenzungsventile 60a, 60b öffnen, so dass der Druck in den Gegendruckräumen 44a, 44b entsprechend dem Schaltdruck von 20 bar vermindert sein wird. Die dann folgenden Druckbegrenzungsventile 62a, 62b und selbstverständlich auch die Druckbegrenzungsventile 64a, 64b werden nicht öffnen.

Es sei darauf hingewiesen, dass hier an Stelle der Druckbegrenzungsventile selbstverständlich auch andere druckmindernde Bauteile, wie z.B. Drosseln oder Blenden eingesetzt werden, die vor allem in dynamischen Zuständen eine derartige Druckminderungsfunktionalität entfalten können.

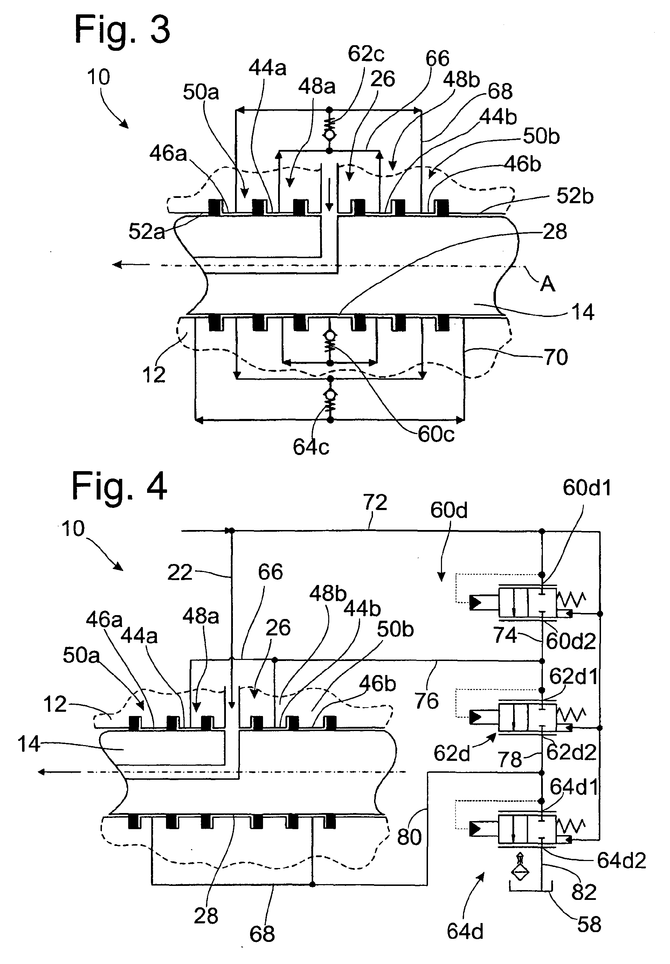

Eine weitere Abwandlung ist in Fig. 3 gezeigt. Auch hier entspricht der Grundaufbau hinsichtlich der Ausgestaltung bzw. der Anordnung der Dichtungsstufen dem mit Bezug auf die Fig. 1 beschriebenen.

Man erkennt, dass bei dieser Ausgestaltungsform die zu beiden Seiten des Kanalangrenzungsbereichs 26 folgenden Gegendruckräume gleicher Dichtungsstufen jeweils zu einem Paar von Druckbegrenzungsräumen zusammengefasst sind bzw. durch eine Verbindungskanalanordnung 66, 68 miteinander in Verbindung stehen. In gleicher Weise erzeugt eine Verbindungskanalanordnung 70 eine Verbindung der beiden Fluidableitungsräume 52a, 52b. Eine Folge des Bereitstellens dieser Verbindungskanalanordnungen 66, 68 ist, dass ständig ein Druckausgleich zwischen den Gegendruckräumen 44a und 44b der jeweiligen ersten Dichtungsstufen 48a und 48b stattfinden kann und entsprechend auch ein Druckausgleich zwischen den Gegendruckräumen 46a, 46b der jeweiligen zweiten Dichtungsstufen 50a, 50b stattfinden kann. Ungleichmäßige Belastungen in den beiden Richtungen weg vom Kanalangrenzungsbereich können somit vermieden werden.

Weiterhin erkennt man in Fig. 3, dass ein Druckbegrenzungsventil 62c bei entsprechenden Druckverhältnissen eine Verbindung zwischen den Gegendruckräumen 44a, 44b der ersten Dichtungsstufen 48a, 48b und den Gegendruckräumen 46a, 46b der zweiten Dichtungsstufen 50a, 50b herstellen kann. In gleicher Weise kann ein Druckbegrenzungsventil 60c eine Verbindung zwischen dem Kanalangrenzungsraum 28 und den Gegendruckräumen 44a und 44b der ersten Dichtungsstufen 48a, 48b herstellen, während ein Druckbegrenzungsventil 64c eine Verbindung zwischen den Gegendruckräumen 46a, 46 der zweiten Dichtungsstufen 50a, 50b und den darauf folgenden Fluidableitungsräumen 52a, 52b herstellen kann.

Auch hier können die Druckbegrenzungsventile 60c, 62c und 64c grundsätzlich mit gleicher Schaltcharakteristik aufgebaut sein, so dass sich eine ähnliche Funktionalität ergibt, wie vorangehend mit Bezug auf die Fig. 2 beschrieben. Zusätzlich ist hier jedoch sichergestellt, dass bei den einander jeweils paarweise zugeordneten und durch eine jeweilige Verbindungskanalanordnung verbundenen Druckbegrenzungsräumen gleiche Druckverhältnisse vorherrschen.

Man erkennt in Fig. 3, dass die Druckbegrenzungsventile bezüglich der Drehachse auch in verschiedenen Umfangsbereichen angeordnet sein können, was selbstverständlich auch bedeutet, dass die Verbindungskanalanordnungen, in welchen die Druckbegrenzungsventile wirken, in verschiedenen Umfangsbereichen liegen. Auf diese Art und Weise kann eine Zwangsdurchströmung der jeweiligen Gegendruckräume erreicht werden, wenn die Druckbegrenzungsventile öffnen und Fluid über diese strömen kann. Dies kann zu einem zusätzlichen Kühleffekt führen. Hier kann beispielsweise bei der gezeigten Anordnung mit zwei Dichtungsstufen ein Versatz um jeweils 180° vorgesehen sein. Das zu den Fluidableitungsräumen führende Druckbegrenzungsventil 64c kann dann mit einem weiteren Winkelversatz angeordnet sein. Grundsätzlich können die drei gezeigten Druckbegrenzungsventile auch einen Winkelabstand von 120° zueinander aufweisen. Die in Fig. 3 gezeigte Anordnung bietet jedoch die Möglichkeit, die beiden im gleichen Umfangsbereich liegenden Druckbegrenzungsventile 60c und 64c in einer gemeinsamen Bohrung unterzubringen, die selbstverständlich dann zum Vermeiden einer gegenseitigen Verbindung durch ein Verschlusselement abzuschließen wäre.

Eine weitere Ausgestaltungsform einer erfindungsgemäßen Drehdurchführung ist in Fig. 4 gezeigt. Auch hier entspricht der grundsätzliche Aufbau, insbesondere im Bereich der Drehdurchführungselemente 12, 14 und der die jeweiligen Dichtungsstufen begrenzenden Dichtungselemente, dem mit Bezug auf die Fig. 1 beschriebenen. Man erkennt, dass auch bei der in Fig. 4 gezeigten Ausgestaltungsform die einander entsprechenden Gegendruckräume 44a, 44b bzw. 46a, 46a der beiden Dichtungsstufen 48a, 48b bzw. 50a, 50b durch die Verbindungskanalanordnungen 66, 68 miteinander verbunden sind, so dass hier ein permanenter Druckausgleich ermöglicht ist. Es sind weiterhin drei Druckbegrenzungsventile 60d, 62d, 64d vorgesehen, die in diesem Falle als Proportionalventile ausgestaltet sind. Jedes dieser Druckbegrenzungsventile 60d, 62d, 64d weist einen Eingangsbereich 60d 1, 62d1, 64d1 und einen Ausgangsbereich 60d2, 62d2 und 64d2 auf, wobei entsprechend dem bei einem jeweiligen Druckbegrenzungsventil vorhandenen Proportionalitätsfaktor zwischen dem jeweiligen Eingangsbereich und dem Ausgangsbereich eine Druckminderung stattfindet. Der Eingangsbereich 60d1 des Druckbegrenzungsventils 60d ist über eine Verbindungsleitung 72 mit dem ersten Kanalbereich 22 im ersten Drehdurchführungselement 12 und somit der Druckfluidquelle verbunden. Eine Verbindungsleitung 74 verbindet den Ausgangsbereich 60d2 des Druckbegrenzungsventils 60d mit dem Eingangsbereich 62d1 des Druckbegrenzungsventils 62d. Ferner ist diese Verbindungsleitung 74 über eine Verbindungsleitung 76 an die Verbindungsleitungsanordnung 66 angeschlossen.

Eine Verbindungsleitung 78 verbindet den Ausgangsbereich 62d2 des Druckbegrenzungsventils 62d mit dem Eingangsbereich 64d1 des Druckbegrenzungsventils 64d. Weiterhin verbindet eine Verbindungsleitung 80 die Verbindungsleitung 78 mit der Verbindungsleitungsanordnung 68. Eine Verbindungsleitung 82 verbindet den Ausgangsbereich 64d2 des Druckbegrenzungsventils 64d mit dem Fluidreservoir 58.

Bei dieser Ausgestaltungsvariante ist also grundsätzlich das Druckbegrenzungsventil 60d dazu in der Lage, eine Verbindung zwischen dem Kanalangrenzungsraum 28 und den Gegendruckräumen 44a, 44b der ersten Dichtungsstufen 48a, 48b herzustellen. Das Druckbegrenzungsventil 62d kann eine Fluidverbindung zwischen den Gegendruckräumen 44a, 44b der ersten Dichtungsstufen 48a, 48b und den Gegendruckräumen 46a, 46b der zweiten Dichtungsstufen 50a, 50b herstellen. Das Druckbegrenzungventil 64d kann eine Verbindung zwischen den Gegendruckräumen 46a, 46d der zweiten Dichtungsstufen 50a, 50b und dem Fluidreservoir 58 herstellen.

Da die Druckbegrenzungsventile 60d, 62d, 64d also als Proportionalventile aufgebaut sind, weisen sie keinen definierten Schaltdruck auf, ab welchem sie öffnen und dann eine Verbindung zwischen den beiden betroffenen Räumen herstellen, sondern erfüllen eine Druckminderungsfunktion, gemäß welcher der an der jeweiligen Ausgangsseite vorhandene Druck einem dem Proportionalitätsfaktor des jeweiligen Ventils entsprechenden Anteil des an der Eingangsseite vorhandenen Drucks entspricht.

In dem hier gezeigten Falle, in welchem die drei Druckbegrenzungsventile 60d, 62d, 64d wieder dazu dienen, die zu diesen parallel liegenden bzw. drucktechnisch parallel geschalteten Dichtungselemente 32a bzw. 32b, 36a bzw. 36b, 40a bzw. 40b zu überbrücken, kann durch Vorgabe der Proportionalitätsfaktoren ebenso dafür gesorgt werden, dass eine gleichmäßige Druckabstufung vom Kammerangrenzungsraum 28 zu den Gegendruckräumen 44a, 44b und dann weiter zu den Gegendruckräumen 46a, 46b stattfindet. Zu diesem Zwecke kann beispielsweise das Druckbegrenzungsventil 60d so ausgebildet sein, dass der an der Ausgangsseite 60d2 vorhandene Ausgangsdruck 2/3 des am Eingangsbereich 60d1 und mithin auch am ersten Kanalbereich 22 vorhandenen Eingangsdrucks entspricht. Bei einem Eingangsdruck von 60 bar hat dies zur Folge, dass an der Ausgangsseite 60d2 und mithin auch in den Gegendruckräumen 44a, 44b ein Druck von 40 bar vorhanden ist. Bei diesem Druckbegrenzungsventil 60d entspricht also ein durch den Quotienten aus Ausgangsdruck und Eingangsdruck definierter Proportionalitätsfaktor einem Wert von 2/3. Um eine entsprechende Druckabstufung im Übergang von den ersten Dichtungsstufen 48a, 48b zu den zweiten Dichtungsstufen 46a, 46b zu erhalten, kann vorgesehen sein, dass das Druckbegrenzungsventil 62d mit einem Proportionalitätsfaktor von etwa 0,5 arbeitet. Der dann am Eingangsbereich 62d1 noch vorhandene Druck von 40 bar wird also um 50% gemindert, so dass sich in den Gegendruckräumen 46a, 46b der zweiten Dichtungsstufen 50a, 50b ein Druck von etwa 20 bar ergibt. Das Druckbegrenzungsventil 64d kann dann mit einem sehr kleinen Proportionalitätsfaktor, also beispielsweise von 0,1 oder noch kleiner arbeiten, so dass grundsätzlich erkennbar ist, dass die Proportionalitätsfaktoren der Druckbegrenzungsventile in Richtung von dem Kanalangrenzungsbereich 26 weg abnehmen. Es sei hier darauf hingewiesen, dass durch die Auswahl der Proportionalitätsfaktoren eine im Wesentlichen beliebige Druckabstufung erzielt werden kann, die selbstverständlich in Abhängigkeit von den konstruktiven Gegebenheiten gewählt werden kann.

Man erkennt bei der in Fig. 4 gezeigten Ausgestaltungsvariante weiter, dass über die Verbindungsleitung 80 und das Druckbegrenzungsventil 64d die Gegendruckräume 46a, 46b der zweiten Dichtungsstufe 50a, 50b in Verbindung mit dem Fluidreservoir 58 gebracht werden können. Dies bedeutet, dass hier ggf. auf die Fluidableitungsräume 52a, 52b und die Ableitungskanalanordnung 56 verzichtet werden kann. Selbstverständlich ist es aber auch bei dieser Ausgestaltungsform möglich, hier angrenzend an die zweiten Dichtungsstufen 50a, 50b durch das Vorsehen der Fluidableitungsräume eine vollständiger Sicherheit gegen den Austritt von Fluid zu realisieren.

Der wesentliche Vorteil einer derartigen mit Proportionalventilen arbeitenden Ausgestaltungsvariante ist, dass dabei in allen Dichtungsstufen bzw. involvierten Räumen auch bei vergleichsweise geringen Drücken proportional herunterskalierte Gegendrücke aufgebaut werden können. Dies heißt, dass auch dann, wenn beispielsweise bei der Ausgestaltungsform gemäß Fig. 2 auf Grund der vorherrschenden Druckverhältnisse nur die Druckbegrenzungsventile 60a, 60b öffnen würden, oder selbst diese Ventile nicht öffnen würden, primär die den Kanalangrenzungsraum 28 begrenzenden Dichtungselemente 32a, 32b belastet wären, die anderen weiter vom Kanalangrenzungsraum 28 entfernt liegenden Dichtungselemente jedoch nur geringer belastet werden. Dies kann zu einem stärkeren Verschleiß der dem Kanalangrenzungsraum 28 näher liegende Dichtungselemente führen. Dieses Problem kann bei der in Fig. 4 gezeigten Ausgestaltungsform vermieden werden, bei welcher durch die Proportionalwirkung der Druckbegrenzungsventile 60d, 62d, 64d immer alle Gegendruckräume bzw. Dichtungselemente in die Kaskadenwirkung involviert sind, auch dann, wenn kleinere Drücke anliegen.

Es sei hier noch darauf hingewiesen, dass der Aufbau derartiger Proportionalventile im Stand der Technik hinlänglich bekannt ist und hier nicht weiter erläutert werden muss.

Bei den vorangehend beschriebenen Ausgestaltungsformen der Drehdurchführungen ist es selbstverständlich möglich, verschiedenste Variationen vorzunehmen. So müssen nicht notwendigerweise die die Dichtungselemente aufnehmenden Nuten im radial äußeren, also ersten Drehdurchführungselement 12 vorgesehen sein. Selbstverständlich können auch im zweiten Drehdurchführungselement 14 derartige die Dichtungselemente aufnehmenden Nuten vorgesehen sein. Auch ist es möglich, verschiedene Dichtungselemente in an verschiedenen Drehdurchführungselementen vorgesehene Nuten eingreifend anzuordnen. Auch die Anzahl der Dichtungselemente und mithin die Anzahl der Gegendruckräume und Dichtungsstufen ist variierbar. Es können mehr als zwei Dichtungsstufen vorgesehen sein. Es ist auch möglich, nur eine einzige Dichtungsstufe mit zwei deren Gegendruckraum begrenzenden Dichtungselementen, selbstverständlich dann an beiden axialen Seiten bezüglich des Angrenzungsraums 28, vorzusehen. Auf diese einzige Dichtungsstufe kann dann beispielsweise der Fluidableitungsraum folgen. Auch können die in Richtung vom Kanalangrenzungsraum weg wirksam werdenden Druckbegrenzungsventile bei nicht proportionalem Schaltverhalten mit unterschiedlichen Schaltcharakteristiken ausgestaltet sein.

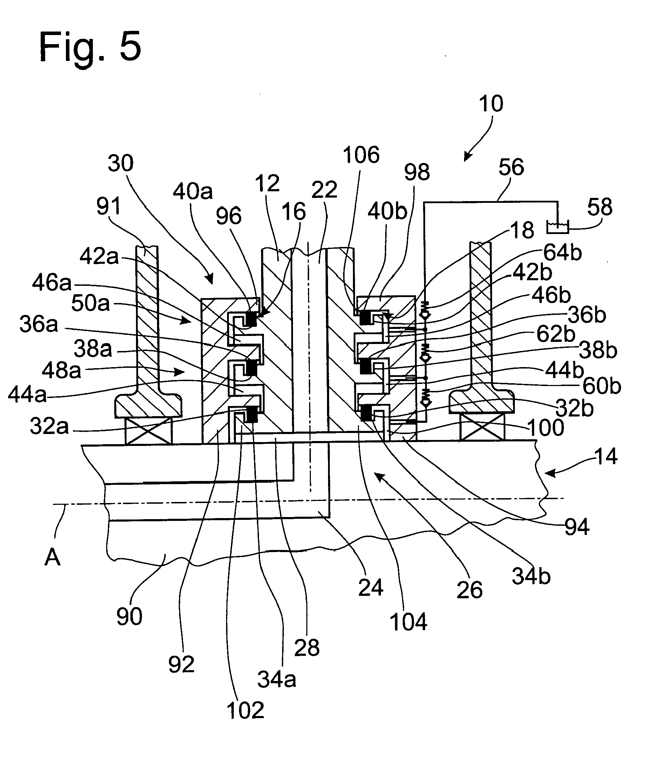

Ein weiteres Beispiel einer erfindungsgemäß aufgebauten Drehdurchführung ist in Fig. 5 gezeigt. Bei dieser Ausgestaltungsvariante sind die in Richtung vom Kanalangrenzungsraum 28 weg aufeinander folgenden Dichtungselemente 32a, 36a, 40a bzw. 32b, 36b, 40b nicht in axialer Abfolge, sondern in radialer Abfolge angeordnet, so dass auch die einzelnen Dichtungsstufen 48a, 50a bzw. 48b, 50b radial aufeinander folgen.

Man erkennt in Fig. 5, dass das zweite und im Allgemeinen rotierende Drehdurchführungselement 14 ein radial inneres, wellenartiges Bauteil 90 umfasst, in welchem auch der Kanalbereich 24, der beispielsweise zu einem Gasfeder-Torsionsschwingungsdämpfer führt, ausgebildet ist. Das wellenartige Bauteil 90 kann in einem schematisch angedeuteten Gehäuse 91 drehbar gelagert sein. Mit diesem wellenartigen Bauteil 90 sind zwei ringscheibenartig ausgebildete und einander spiegelbildlich gegenüberliegende Scheibenteile 92, 94 so beispielsweise durch Verschweißung oder dergleichen fest verbunden, dass sie zwischen sich ein das erste Drehdurchführungselement 12 bereitstellendes und im Wesentlichen ebenfalls ringscheibenartig ausgebildetes Bauteil aufnehmen. Die beiden Scheibenteile 92, 94 weisen entsprechend der Anzahl an radial gestaffelt liegenden Dichtungselementen aufeinander zu sich erstreckende Vorsprünge 96, 98 radial gestaffelt auf. Jeder dieser im Wesentlichen zylindrisch geformten und um die Drehachse A umlaufenden Vorsprünge 96, 98 stellt mit seiner Innenumfangsfläche einen Abschnitt 100 der zweiten Drehdurchführungselementenoberfläche 18 des zweiten Drehdurchführungselements 14 bereit. Man erkannt, dass hier also die zweite Drehdurchführungselementenoberfläche 18 insgesamt sechs derartige Abschnitte 100 umfasst, die hier Innenumfangsflächen bereitstellen und von welchen jeweils drei an jedem der Scheibenteile 92, 94 radial gestaffelt vorgesehen sind.

An dem nicht rotierenden ersten Drehdurchführungselement ist an seinen beiden entgegengesetzten axialen Seiten eine jeweils der Anzahl der Vorsprünge 96, 98 entsprechende Anzahl an Vorsprüngen 102, 104 vorgesehen. Jeder dieser zylindrisch ausgestalteten und um die Drehachse A vollständig umlaufenden Vorsprünge 102, 104 stellt mit seiner Außenumfangsfläche jeweils einen Abschnitt 106 der ersten Drehdurchführungselementenoberfläche 16 bereit, die hier nunmehr als Außenumfangsfläche bzw. eine Mehrzahl von Abschnitten von Außenumfangsflächen ausgebildet ist. In jedem dieser Abschnitte 106 ist eine der Nuten 34a, 38a, 42a bzw. 34b, 38b, 42b zur Aufnahme der Dichtungselemente 32a, 36a, 40a bzw. 32b, 36b, 40b vorgesehen. Diese Dichtungselemente liegen dann jeweils zwischen zwei Vorsprüngen 96, 102 bzw. 98, 104 an den beiden Drehdurchführungselementen 12, 14 in der vorangehend bereits beschriebenen Art und Weise dichtend an.

An jeder der beiden axialen Seiten des ersten Drehdurchführungselements 12 sind also in Richtung von dem Kanalangrenzungsraum 28 weg wieder zwei Dichtungsstufen 48a, 50a bzw. 48b, 50b gebildet, die, ebenso wie dies vorangehend beschrieben wurde, eine allmähliche Druckreduzierung in Richtung vom Kanalangrenzungraum 28 weg erzeugen.

Aufgrund der bezüglich des Kanalangrenzungraums 28 wieder symmetrischen Ausgestaltung mit jeweils zwei Dichtungsstufen an den beiden Seiten, wobei diese beiden Dichtungsstufen hier radial aufeinander folgen, wird wieder zu beiden Seiten des Kanalangrenzungsbereichs 26 in eine zuverlässige Abdichtwirkung erzielt.

Es ist hier darauf hinzuweisen, dass in der Fig. 5 an der linken Seite des Kanalangrenzungsraums 28 eine Ausgestaltungsvariante veranschaulicht ist, die der in Fig. 1 gezeigten entspricht. An der rechten Seite des Kanalangrenzungsraums 28 ist eine Variante gezeigt, die der in Fig. 2 gezeigten Ausgestaltungsvariante entspricht, bei welcher die aufeinander folgenden Gegendruckräume 44b, 46b der beiden Dichtungsstufen 48b, 50b jeweils durch die Druckbegrenzungsventile 60b, 62b bzw. 64b verbunden und somit die die jeweiligen Dichtungsstufen 48b, 50b begrenzenden Dichtungselemente 32b, 36b, 40b überbrücken. Es ist selbstverständlich, dass auch bei dieser Ausgestaltungsform an beiden axialen Seiten des ersten Drehdurchführungselements 12 gleiche Ausgestaltungen vorgesehen sein können, also selbstverständlich auch an beiden Seiten Druckbegrenzungsventile vorgesehen sein können, keine Druckbegrenzungsventile vorgesehen sein können, die Gegendruckräume gleicher Dichtungsstufen jeweils zu Paaren von Gegendruckräumen zusammengeschlossen sein können und dann diese Paare auch noch durch Druckbegrenzungsventile miteinander verbunden sein können, so wie dies auch in den Ausgestaltungsformen der Fig. 3 und 4 gezeigt ist. Weiter ist es selbstverständlich, dass auf die in Richtung vom Kanalangrenzungsraum 28 weg letzte Dichtungsstufe 50a bzw. 50b jeweils wieder ein vorangehend bereits mit Bezug auf die Fig. 1 erläuterter Fluidableitungsraum vorgesehen sein kann, so dass das letzte Druckbegrenzungsventil 64b (und selbstverständlich auch 64a) dann das letzte Dichtungselement 40b bzw. 40a zu diesem Fluidableitungsraum überbrücken kann und der Fluidableitungsraum dann über die Leitung 56 zum Fluidreservoir 58 offen sein kann.

Grundsätzlich können also mit der in der Fig. 5 gezeigten radialen Staffelung der einzelnen Dichtungselemente aufeinander folgende Dichtungsstufen die gleichen Effekte erzielt werden, wie bei der vorangehend beschriebenen axialen Staffelung. Selbstverständlich ist es auch möglich, bei der in Fig. 5 gezeigten Ausgestaltungsform die Dichtungselemente der aufeinander folgenden Dichtungsstufen auch axial versetzt zueinander anzuordnen.

Es ist selbstverständlich möglich, das Prinzip der vorliegenden Erfindung bei axial sich gegenüber liegenden Drehdurchführungselementen bzw. Drehdurchführungselementenoberflächen zu realisieren. Hier kann beispielsweise der Kanalangrenzungsbereich dann im Bereich der Drehachse und somit zentral positioniert sein, so dass die Dichtungselemente, die dann ebenfalls Ringgestalt aufweisen können, nach radial außen gestaffelt liegen und sich somit von radial innen nach radial außen eine Abfolge von Dichtungsstufen ergibt. Der Kanalangrenzungsbereich kann jedoch bezüglich der Drehachse nach radial außen versetzt liegen, so dass sowohl nach radial innen als auch nach radial außen eine radiale Abfolge von Dichtungsstufen realisiert sein kann.

## Patentansprüche

1. Drehdurchführung zum Durchführen von Fluid im Angrenzungsbereich zwischen zwei bezüglich einander um eine Drehachse (A) drehbaren Drehdurchführungselementen (12, 14), wobei ein erstes (12) der Drehdurchführungselemente (12, 14) eine erste Drehdurchführungselementenoberfläche (16) aufweist und ein zweites (14) der Drehdurchführungselemente (12, 14) eine der ersten Drehdurchführungselementenoberfläche (16) gegenüber liegende und bezüglich dieser um die Drehachse (A) drehbare zweite Drehdurchführungselementenoberfläche (18) aufweist, wobei eine Fluidkanalanordnung (20) mit einem ersten Kanalbereich (22) im ersten Drehdurchführungselement (12) und mit einem zweiten Kanalbereich (24) im zweiten Drehdurchführungselement (14) vorgesehen ist und der erste Kanalbereich (22) und der zweite Kanalbereich (24) in einem Kanalangrenzungsbereich (26) in Fluidaustauschverbindung miteinander stehen, ferner umfassend eine zwischen dem ersten Drehdurchführungselement und dem zweiten Drehdurchführungselement wirkende Dichtungsanordnung (30),
**dadurch gekennzeichnet, dass** die Dichtungsanordnung (30) wenigstens eine Dichtungsstufe (48a, 50a, 48b, 50b) mit einer Gegendruckkammer (44a, 46a, 44b, 46b) umfasst, welche zwischen einem dem Kanalangrenzungsbereich (26) näher liegenden Dichtungselement (32a, 36a, 32b, 36b) und einem vom Kanalangrenzungsbereich (26) weiter entfernt liegenden Dichtungselement (36a, 40a, 36b, 40b) begrenzt ist.

2. Drehdurchführung nach Anspruch 1,
**dadurch gekennzeichnet, dass** in Richtung von dem Kanalangrenzungsbereich (22) weg eine Mehrzahl aufeinander folgender Dichtungsstufen (48a, 50a, 48b, 50b) jeweils mit einer Gegendruckkammer (44a, 46a, 44b, 46b) vorgesehen ist, wobei die Gegendruckkammern (44a, 46a, 44b, 46b) zweier aufeinander folgender Dichtungsstufen (48a, 50a, 48b, 50b) durch ein Dichtungselement (36a, 36b) getrennt sind, das bei der dem Kammerangrenzungsbereich (26) näher liegenden Dichtungsstufe (48a, 48b) das vom Kanalangrenzungsbereich (26) weiter entfernt liegende Dichtungselement (36a, 36b) bildet und bei der vom Kanalangrenzungsbereich (26) weiter entfernt liegenden Dichtungsstufe (50a, 50b) das dem Kanalangrenzungsbereich (26) näher liegende Dichtungselement (36a, 36b) bildet.

3. Drehdurchführung nach Anspruch 1 oder 2,
**dadurch gekennzeichnet, dass** die erste Drehdurchführungselementenoberfläche (16) eine zur Drehachse (A) im Wesentlichen koaxiale Innenumfangsfläche des ersten Drehdurchführungselements (12) ist und dass die zweite Drehdurchführungselementenoberfläche (18) eine zur Drehachse (A) und zur ersten Drehdurchführungselementenoberfläche (16) im Wesentlichen koaxiale Außenumfangsfläche (18) des zweiten Drehdurchführungelements (14) ist.

4. Drehdurchführung nach Anspruch 1 oder 2,
**dadurch gekennzeichnet, dass** die erste Drehdurchführungelementenoberfläche und die zweite Drehdurchführungselementenoberfläche zur Drehachse im Wesentlichen orthogonal stehen und einander axial gegenüber liegen.

5. Drehdurchführung nach einem der Ansprüche 1 bis 4,
**dadurch gekennzeichnet, dass** die Dichtungselemente (32a, 36a, 40a, 32b, 36b, 40b) ringartig ausgebildet sind und in Ringnuten (34a, 38a, 42a, 34b, 38b, 42b) am ersten Drehdurchführungselement (12) oder/und am zweiten Drehdurchführungselement (14) eingreifend positioniert sind und an der Drehdurchführungselementenoberfläche (16, 18) des jeweils anderen Drehdurchführungselements (12, 14) anliegen.

6. Drehdurchführung nach Anspruch 2 oder einem der Ansprüche 3 bis 5, sofern auf Anspruch 2 rückbezogen,
**dadurch gekennzeichnet, dass** wenigstens zwei unmittelbar aufeinander folgende Gegendruckräume (44a, 46a, 44a, 44b) über ein zu dem diese trennenden Dichtungselement (36a, 36b) parallel wirkendes Druckbegrenzungsventil (62a, 62b; 62c; 62d) in Verbindung miteinander bringbar sind.

7. Drehdurchführung nach einem der Ansprüche 1 bis 6,
**dadurch gekennzeichnet, dass** an beiden Seiten in Richtung von dem Kanalangrenzungsbereich (26) weg jeweils wenigstens eine Dichtungsstufe (48a, 50a, 48b, 50b) mit einem Gegendruckraum (44a, 46a, 44b, 46b) vorgesehen ist und dass die Gegendruckräume (44a, 46a, 44b, 46b) gleicher Dichtungsstufen (48a, 50a, 48b, 50b) an den beiden Seiten bezüglich des Kanalangrenzungsbereichs (26) durch eine Verbindungskanalanordnung (66, 68) zum Bereitstellen eines Paares in Verbindung miteinander stehender Gegendruckräume (44a, 46a, 44b, 46b) verbunden sind.

8. Drehdurchführung nach Anspruch 7,
**dadurch gekennzeichnet, dass** die Paare von Gegendruckräumen (44a, 46a, 44b, 46b) unmittelbar aufeinander folgender Dichtungsstufen (48a, 50a, 48b, 50b) durch ein Druckbegrenzungsventil (62c; 62d) in Verbindung miteinander bringbar sind.

9. Drehdurchführung nach Anspruch 7 oder 8,
**dadurch gekennzeichnet, dass** die Verbindungskanalanordnungen (66, 68) verschiedener Paare von Gegendruckräumen (44a, 46a, 44b, 46b) in verschiedenen Umfangsbereichen bezüglich der Drehachse (A) angeordnet sind.

10. Drehdurchführung nach einem der Ansprüche 1 bis 9,
**dadurch gekennzeichnet, dass** der Gegendruckraum (44a, 44b) einer auf den Kanalangrenzungsbereich (26) unmittelbar folgenden ersten Dichtungsstufe (48a, 48b) über ein Druckbegrenzungsventil (60a, 60b; 60c; 60d) in Verbindung mit einem Kanalangrenzungsraum (28) des Kanalangrenzungsbereichs (26) bringbar ist.

11. Drehdurchführung nach einem der Ansprüche 1 bis 10,
**dadurch gekennzeichnet, dass** der Gegendruckraum (46a, 46b) einer in Richtung von dem Kanalangrenzungsbereich (26) weg letzten Dichtungsstufe (50a, 50b) über ein Druckbegrenzungsventil (64a, 64b; 64c; 64d) in Verbindung mit einem auf den Gegendruckraum (46a, 46b) dieser Dichtungsstufe (50a, 50b) folgenden Fluidableitungsraum (52a, 52b) bringbar ist und dass dem Fluidableitungsraum (52a, 52b) eine Ableitungskanalanordnung (56) zugeordnet ist zum Ableiten von Fluid aus dem Fluidableitungsraum (52a, 52b).

12. Drehdurchführung nach Anspruch 11,
**dadurch gekennzeichnet, dass** die Ableitungskanalanordnung (56) zu einem im Wesentlichen drucklosen Fluidreservoir (58) führt.

13. Drehdurchführung nach einem der Ansprüche 6 bis 12,
**dadurch gekennzeichnet, dass** das Druckbegrenzungsventil (60a, 62a, 64a, 60b, 62b, 64b; 60c, 62c, 64c; 60d, 62d, 64d) eine derartige Druckbegrenzungscharakteristik aufweist, dass eine in den durch dieses zu verbindenden Räumen (28, 44a, 44b, 46a, 46b, 52a, 52b) maximal erzeugbare Druckdifferenz kleiner ist, als eine maximal zulässige Druckbelastung des diese Räume (28, 44a, 44b, 46a, 46b, 52a, 52b) trennenden Dichtungselements (32a, 32b, 34a, 34b, 36a, 36b).

14. Drehdurchführung nach einem der Ansprüche 6 bis 13,
**dadurch gekennzeichnet, dass** unmittelbar aufeinander folgende Räume (28, 44a, 44b, 46a, 46b, 52a, 52b) verbindende/trennende Druckregelventile (60a, 62a, 64a, 60b, 62b, 64b; 60c, 62c, 64c; 60d, 62d, 64d) derart ausgebildet sind, dass die zwischen unmittelbar aufeinander folgenden Räumen (28, 44a, 44b, 46a, 46b, 52a, 52b) maximal erzeugbaren Druckdifferenzen im Wesentlichen gleich sind.

15. Drehdurchführung nach Anspruch 14,
**dadurch gekennzeichnet, dass** die Druckbegrenzungsventile (60a, 62a, 64a, 60b, 62b, 64b; 60c, 62c, 64c) mit im Wesentlichen gleichem Schaltdruck ausgebildet sind.

16. Drehdurchführung nach Anspruch 14,
**dadurch gekennzeichnet, dass** die Druckbegrenzungsventile (60d, 62d, 64d) als Proportionalventile ausgebildet sind.

17. Drehdurchführung nach Anspruch 16,
**dadurch gekennzeichnet, dass** ein durch den Quotienten aus Ausgangsdruck und Eingangsdruck eines jeweiligen Druckbegrenzungsventils (60d, 62d, 64d) gebildeter Proportionalitätsfaktor bei den Druckbegrenzungsventilen (60d, 62d, 64d) in Richtung von dem Kanalangrenzungsbereich (26) weg abnimmt.

18. Kombination einer Torsionsschwingungsdämpferanordnung mit einer Primärseite und einer Sekundärseite und einer die Primärseite mit der Sekundärseite koppelnden und ein kompressibles Medium umfassenden Dämpferanordnung mit einer Drehdurchführung nach einem der vorangehenden Ansprüche.
